# EUROPEAN PATENT APPLICATION

(11) **EP 0 678 372 A1**
(43) Date of publication of application: **25.10.1995**
(21) Application number: 95105119.2
(22) Date of filing: 05.04.1995
(51) Int. Cl.: B29C 51/16

(54) **Apparatus for positioning labels in thermoforming molds**

(30) Priority: 20.04.1994 IT MI940767
(71) Applicant: SY.TRA MA. S.r.l., I-20060 Vignate (Prov. of Milan) (IT)
(72) Inventor: Motta, Armando, I-20096 Pioltello (Milano) (IT)
(74) Representative: Modiano, Guido, Dr.-Ing.

(57) **Abstract**

An apparatus for positioning labels in thermoforming molds, which comprises a label magazine station (4), a label positioning station (5), and a label folding station (6). The apparatus comprises means (10) for removing the labels (11) from the magazine station (4) to arrange them in sequence in the positioning station (5), which is provided with label positioning locators (12). The machine also has folding means (13), which can engage the labels (11) in the positioning station and can move, when actuated, to insert the labels (11) in folding compartments (14) provided in the folding station (6). The folding compartments (14) can move by control with respect to each other so as to vary their mutual distance according to the distance of the compartments (16) of the thermoforming mold (17). There are also means (15) for transferring the folded labels (11) from the folding compartments (14) to the compartments (16) of the thermoforming mold (17).

## Description

The present invention relates to an apparatus for positioning labels in thermoforming molds.

Thermoforming machines for producing containers for packaging products, such as for example cup-shaped containers for packaging liquid or semiliquid food products, are known.

Said containers are generally marked with a label that is automatically placed on the lid that seals the top of the container or is printed directly on the lid.

Due to various problems, the need has been felt to apply a label on the lateral surface of these containers directly during thermoforming, that is to say by introducing the label in the thermoforming mold before molding the container.

The main problem to be solved in order to obtain a satisfactory result is precision in the positioning of the labels in the thermoforming mold.

The devices currently used for this operation are structurally complex and do not always ensure the precision and reliability required in positioning the labels in the thermoforming mold.

The aim of the present invention is to solve the abovementioned problems by providing an apparatus for positioning labels with high precision inside a thermoforming mold.

Within the scope of this aim, an object of the invention is to provide an apparatus that requires a limited space for its installation, so that it does not hinder the thermoforming mold.

Another object of the invention is to provide an apparatus that is highly reliable in operation.

Another object of the invention is to provide an apparatus that is economically competitive with respect to currently commercially available devices used to introduce labels in thermoforming molds.

This aim, these objects, and others which will become apparent hereinafter are achieved by an apparatus for positioning labels in thermoforming molds, characterized in that it comprises: a label magazine station; a label positioning station; a label folding station; means for removing the labels from said magazine station to arrange them in sequence in said positioning station, which is provided with label positioning locators; folding means, which can engage the labels in said positioning station and can move, when actuated, to transfer said labels into folding compartments provided in said folding station, said folding compartments being movable by control with respect to each other so as to vary their mutual distance with respect to the distance of the compartments of the thermoforming mold; and means for transferring the folded labels from said folding compartments to the compartments of the thermoforming mold.

Further characteristics and advantages of the invention will become apparent from the description of a preferred but not exclusive embodiment of the apparatus according to the invention, illustrated only by way of non-limitative example in the accompanying drawings, wherein:

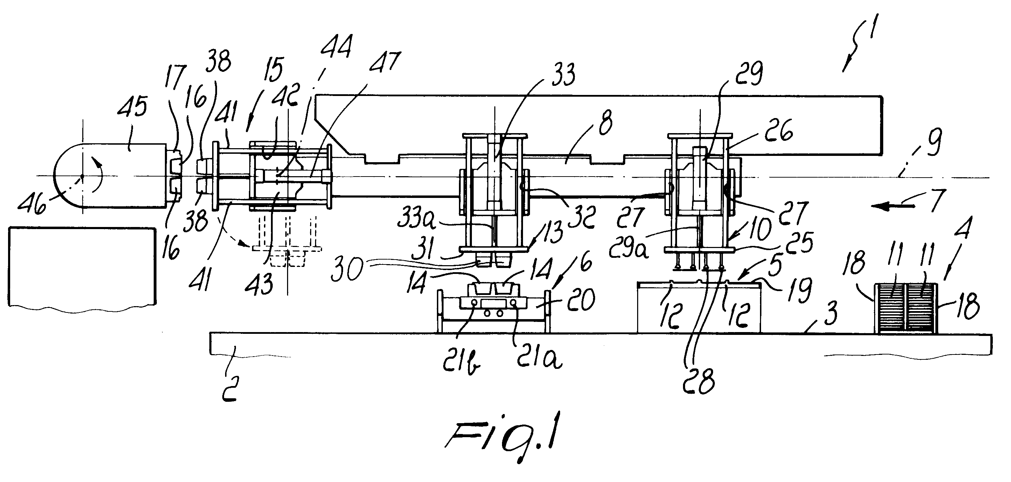

figure 1 is a schematic lateral elevation view of the apparatus according to the invention;

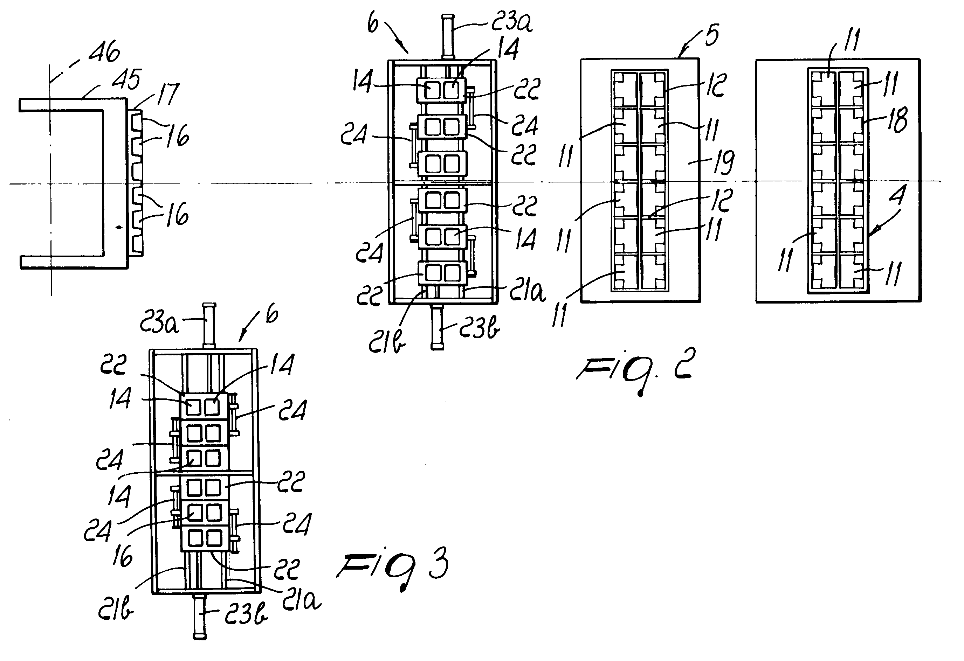

figure 2 is a schematic top plan view of the various stations of the apparatus according to the invention and of a thermoforming mold;
figure 3 is a schematic top plan view of the folding station, illustrating the variation in the mutual distance of the folding compartments;

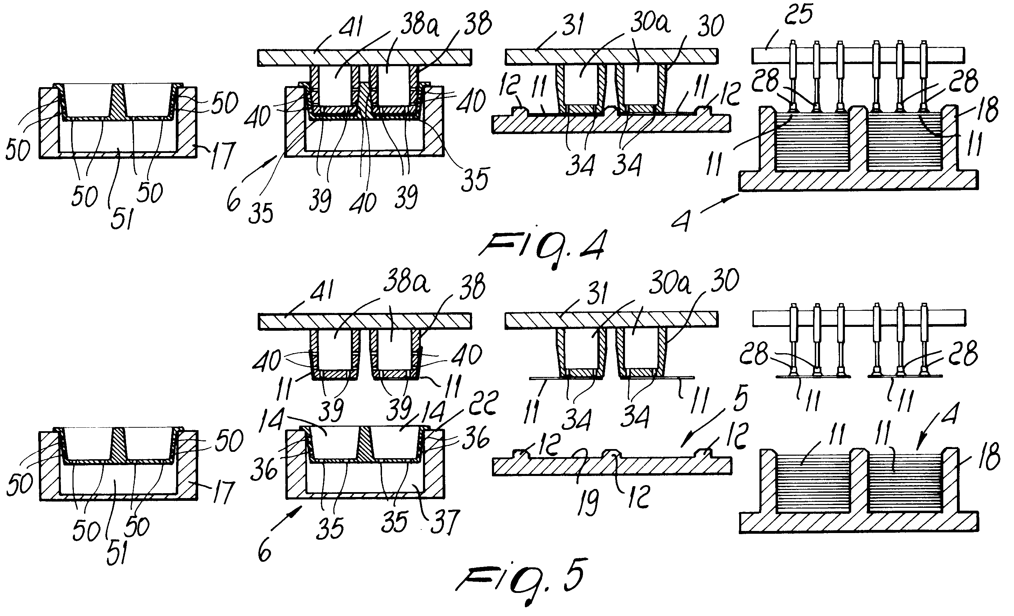

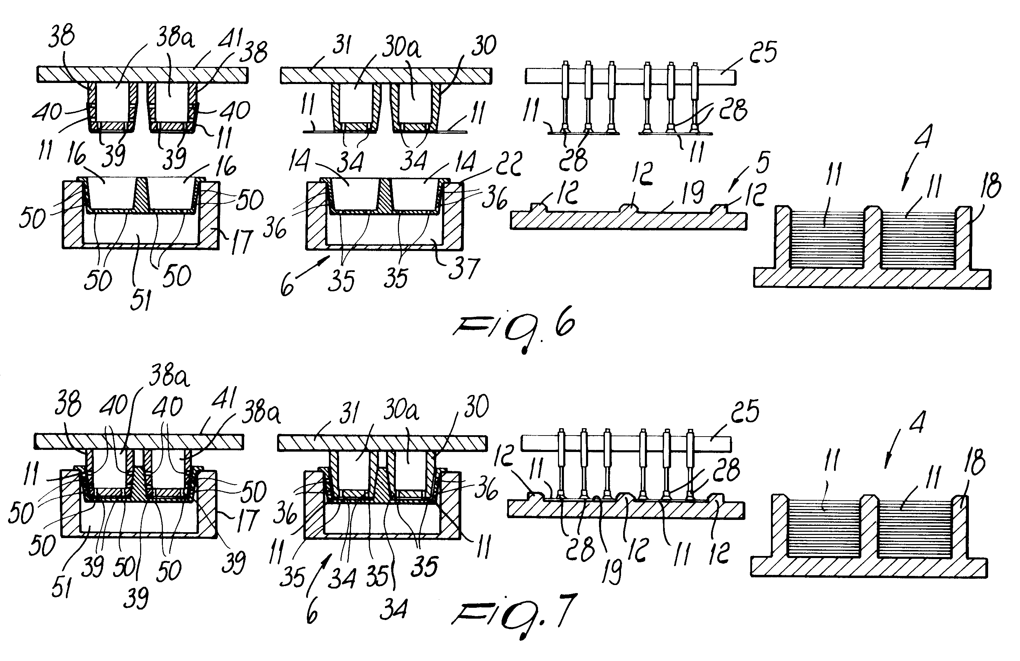

figures 4 to 7 are schematic partially sectional lateral elevation views of the operating sequence of the apparatus according to the invention.

With reference to the above figures, the apparatus according to the invention, generally designated by the reference numeral 1, comprises a footing 2 that forms a substantially horizontal supporting surface 3 which is provided with a magazine station 4, a positioning station 5, and a folding station 6, which are mutually spaced along a substantially horizontal working direction, referenced by the arrow 7.

Above the stations 4, 5, and 6 there is a carriage 8 that is arranged so that its axis 9 is parallel to the working direction 7; said carriage is provided with removal means 10 that can engage the labels 11 placed in the magazine station 4 to remove them and deposit them in the positioning station 5, which is provided with locators 12 for the labels 11. The carriage 8 also supports folding means 13 which can engage, under control, the labels 11 to remove them from the positioning station 5 and deposit them in folding compartments 14, which are provided at the folding station 6 and are open in an upward direction.

Furthermore, the carriage 8 is provided with transfer means 15 which can be actuated by control to remove the labels 11 from the folding compartments 14 of the folding station 6 and insert them in the compartments 16 of a thermoforming mold 17, which is spaced from the folding station 6 along the working direction 7, as will become apparent hereinafter.

More particularly, the magazine station 4 comprises a container 18, which is open at the top and inside which the labels 11 to be inserted in the thermoforming mold 17 are stacked. Said container 18 has vertical walls which are mutually spaced according to the dimensions of the labels 11, in such a way that the labels 11 are correctly stacked inside the magazine station 4.

The positioning station 5 substantially comprises a label supporting surface 19, from which lugs project upwards and form the locators 12. Said locators 12 correctly position, with great precision, the labels relative to each other on the label supporting surface 19.

The folding station 6 is substantially composed of a base 20 that supports, by means of horizontal guides 21a and 21b that run substantially at right angles to the working direction 7, a plurality of blocks 22 inside which the folding compartments 14 are delimited; said folding compartments are substantially shaped like the compartments 16 of the thermoforming mold 17.

Pneumatic cylinders 23a and 23b act on the blocks 22 and allow to vary the distance of the blocks 22, and therefore of the corresponding folding compartments 14, in a direction that is parallel to the guides 21a and 21b, so as to make the distance between the folding compartments substantially equal to the distance between the compartments 16 of the thermoforming mold 17. The various blocks 22 are furthermore mutually connected by rigid rods 24 that allow to restore the distance between the blocks 22 during mutual spacing, as will become apparent hereinafter.

The means 10 for removing the labels 11 from the magazine station 4 substantially comprise an arm 25, which is mounted on a frame 26 which is supported by the carriage 8 in appropriate guides 27 so that it can slide in a substantially vertical direction. Suckers 28 are associated on the lower side of the arm 25 and can be connected by control, in a per se known manner, to a vacuum source so as to retain the labels 11 during their transfer from the magazine station 4 to the positioning station 5. The vertical movement of the arm 25 is achieved by means of a pneumatic cylinder 29, which is supported by the carriage 8 and acts on the arm 25 with the stem 29a of its piston, making the frame 26 slide within the guides 27.

The folding means 13 comprise male elements 30 that are shaped complementarily with respect to the compartments 14 and are fixed to a frame 31 which is supported by the carriage 8 so that it can slide by means of appropriate vertical guides 32. In this case, too, there is a pneumatic cylinder 33 that acts on the frame 31 with the stem 33a of its piston, so as to make it move in a vertical direction with respect to the carriage 8.

The male elements 30 are suitably hollow, and their inner cavity 30a, which can be controllably connected in a per se known manner to a vacuum source, is connected to the outside through holes 34 formed on the end of the male elements 30 which is to be directed towards the bottom of the folding compartments 14.

Both the bottom and the side walls of the folding compartments 14, which are meant to make contact with the labels 11, are also crossed by holes 35 and 36 that connect the various compartments 14 with an air space 37 that is formed in the blocks 22 below the compartments 14. The air space can be controllably connected to a vacuum source in a per se known manner which is not shown for the sake of simplicity.

The transfer means 15 are also provided with male elements 38, which are shaped complementarily to the compartments 16 of the thermoforming mold 17 and therefore so as to match the folding compartments 14. Said male elements 38 are also hollow, and their inner cavity 38a can also be controllably connected to a vacuum source in a per se known manner; said inner cavity is connected to the outside through holes 39 and 40, which are formed respectively at the end of the male elements 38 that is to be directed towards the bottom of the folding compartments 14 and of the compartments 16 of the thermoforming mold and in the side walls of said male elements 38.

The male elements 38 are supported by a frame 41 which is supported so that is can slide in appropriate guides 42 formed in a support 43 that is associated with the carriage 8. The frame 41 is controllably movable along the guides 42 by virtue of the action of a pneumatic cylinder 47.

The support 43 is pivoted to the carriage 8 about an axis 44 which lies transversely to the working direction 7, so as to allow to move the transfer means 15 from a position for removing the labels from the folding compartments 14, the guides 42 being substantially vertical in this position, to a position for inserting the labels 11 in the compartments 16 of the thermoforming mold 17, said guides 42 being substantially parallel to the working direction 7 in this position.

The thermoforming mold 17 is mounted on a support 45 that can rotate about an axis 46 that lies transversely to the working direction 7, so as to allow the thermoforming mold 17 to move from a label receiving position, in which the open side of the compartments 16 faces one end of the carriage 8 that supports the transfer means 15, to a molding position, in which the open side of the compartments 16 is directed upwards.

The compartments 16 of the thermoforming mold 17 are also provided with holes 50 on their bottom and on their side walls that are meant to make contact with the labels; said holes are connected to an air space 51 that is formed in the thermoforming mold 17 and can be controllably connected to a vacuum source.

The operation of the apparatus according to the invention is as follows.

Initially, the carriage 8 is moved towards the magazine station 4, so that its suckers 28 lie above the magazine station 4. At this point the pneumatic cylinder 29 is actuated, lowering the suckers 28 until they make contact with the labels 11 placed at the top of the stack of labels in the magazine station 4. The connection of the suckers 28 to the vacuum source causes the engagement of the suckers 28 with said labels 11. The subsequent actuation of the pneumatic cylinder 29 in the opposite direction causes the extraction of the labels 11, retained by the suckers 28, above the magazine station 4. The carriage 8 is then moved in the working direction 7 so as to place the suckers 28, with the removed labels 11, above the positioning station 5. By means of a further activation of the pneumatic cylinder 29, the labels are placed on the surface 19 between the locators 12 and are released by the suckers 28 by interrupting the connection of the suckers 28 with the vacuum source.

At this point, the carriage 8 is moved in reverse with respect to the working direction 7 so as to move the male elements 30 of the folding means 13 above the labels located in the positioning station 5.

As described with reference to the suckers 28, the male elements 30 are moved in contact with the labels 11 located between the locators 12, and the cavities 30a of the male elements 30 are connected to the vacuum source, so that they engage the labels 11 and transfer them, by means of the subsequent actuation of the carriage 8 along the working direction 7, above the folding compartments 14. By means of the actuation of the pneumatic cylinder 33, the labels 11 are inserted in the folding compartments 14, where they are released by the male elements 30 by interrupting the connection of the cavity 30a of the male elements 30 to the vacuum source and by activating instead the connection of the vacuum source to the cavity 37 of the blocks 22. This achieves the correct folding of the labels so as to match the shape that will be assumed by the container to be formed inside the thermoforming mold 17. At this point the distance between the blocks 22 is reduced by actuating the pneumatic cylinders 23a and 23b so are to adapt said distance to the distance provided between the compartments 16 inside the thermoforming mold 17.

The folded labels are the removed by the male elements 38, which by means of the actuation of the pneumatic cylinder 47 are inserted in the compartments 14 and then transferred by said male elements 38, by means of the rotation of the support 43 about the axis 44, inside the compartments 16 of the thermoforming mold 17. The labels are transferred by interrupting the connection of the holes 35 and 36 to the vacuum source and by instead connecting the vacuum source to the holes 39 and 40 of the male elements 38 so as to keep the labels folded.

After the labels have been removed from the folding station 6, the actuation of the pneumatic cylinders 23a and 23b restores the initial distance between the compartments 16 so that said compartments can receive other labels to be folded.

In the meantime, the labels 11 have been correctly positioned in the compartments 16 of the thermoforming mold 17, in which they are retained by suction through the holes 50, and the containers are molded so that during the molding of the containers the labels correct adhere to the outer surface of said containers.

The operation of the device has been described sequentially, starting for the sake of clarity from a startup step, but it is understood that in steady-state conditions the folding means 13 are arranged above the positioning station 5 and the transfer means 15 are located above the folding station 6 while the removal means 10 are located above the magazine station 4, so that during the subsequent transfer of the labels from the magazine station 4 to the positioning station 5 said labels pass through the folding station 6 and correctly folded labels simultaneously pass from the folding station 6 to the thermoforming mold 17.

It is thus evident that the apparatus according to the invention fully achieves the intended aim, since it allows to rapidly and very precisely position labels directly in the thermoforming mold, so as to achieve the application of the labels to the product containers directly during the thermoforming of said containers.

The apparatus thus conceived is susceptible of several modifications and variations, all of which are within the scope of the inventive concept; all the details may furthermore be replaced with other technically equivalent elements.

In practice, the materials employed, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for positioning labels in thermoforming molds, characterized in that it comprises: a label magazine station (4); a label positioning station (5); a label folding station (6); means (10) for removing the labels (11) from said magazine station (4) to arrange them in sequence in said positioning station (5), which is provided with label positioning locators (12); folding means (30), which can engage the labels (11) in said positioning station (5) and can move, when actuated, to transfer said labels (11) into folding compartments (14) provided in said folding station (6), said folding compartments (14) being movable by control with respect to each other so as to vary their mutual distance according to the distance of the compartments (16) of the thermoforming mold (17); and means (15) for transferring the folded labels (11) from said folding compartments (14) to the compartments (16) of the thermoforming mold (17).

2. Apparatus according to claim 1, characterized in that said means (10) for transferring the labels (11) from said magazine station (4) to said positioning station (5) comprise an arm (25) that is provided with suckers (28) that can be controllably connected to a vacuum source to engage the labels (11) to be transferred from said magazine station (4) to said positioning station (5).

3. Apparatus according to claim 1, characterized in that said positioning station (5) comprises a substantially horizontal label supporting surface (19) with raised lugs (12) that form locators for the correct positioning of the labels (11) when they are released by said suckers (28).

4. Apparatus according to one or more of the preceding claims, characterized in that said folding station (6) comprises a plurality of blocks (22), a folding compartment (14) being formed inside each block (22), said folding compartment (14) being open on one side, said blocks (22) being slidingly supported by a base (20) along an actuation direction, actuation means (23a,23b) being provided which act by control on at least part of said blocks (22) to move them along said actuation direction so as to vary the distance between said blocks (22).

5. Apparatus according to one or more of the preceding claims, characterized in that said folding compartments (14) are substantially shaped like said compartments (16) of the thermoforming mold (17).

6. Apparatus according to one or more of the preceding claims, characterized in that said folding compartments (14) are provided with suction means that can be connected to a vacuum source to retain the labels (11) inserted in said folding compartments (14) against the walls of said folding compartments (14).

7. Apparatus according to one or more of the preceding claims, characterized in that said folding means (13) comprise male elements (30) that are shaped complementarily to said folding compartments (14) and are provided, at their end that matches the bottom of said folding compartments (14), with suction means that can be connected to a vacuum source to retain the labels (11) during their transfer from said positioning station (5) into the folding compartments (14) of said folding station (6).

8. Apparatus according to one or more of the preceding claims, characterized in that said means (15) for transferring the labels (11) from said folding station (6) to the thermoforming mold (17) comprise male elements (38) which are shaped complementarily to said folding compartments (14) and to said compartments (16) of the thermoforming mold (17), said male elements (38) having, on their surface meant to make contact with the labels (11) placed in said folding compartments (14), suction means (39,40) that can be connected to a vacuum source to remove the labels (11) from said folding compartments (14) and insert them in the compartments (16) of the thermoforming mold (17) so as to maintain their folded condition.

9. Apparatus according to one or more of the preceding claims, characterized in that said magazine station (4), said positioning station (5), and said folding station (6) are arranged side by side along a working direction (7) on a supporting surface (3), said means (10) for removing the labels (11) from said magazine station (4), said folding means (13), and said transfer means (15) being mounted on a carriage (8) that can move by control along said working direction (7).

10. Apparatus according to one or more of the preceding claims, characterized in that said supporting surface (3) is substantially horizontal, said carriage (8) being arranged horizontally above said supporting surface (3) so that its axis is substantially parallel to said working direction (7), said removal means (10) and said folding means (13) being controllably movable along a substantially vertical direction to access respectively said magazine station (4), which is open in an upward region, said positioning station (5), and said folding station (6) with said folding compartments (14) opened upward.

11. Apparatus according to one or more of the preceding claims, characterized in that said carriage (8) faces the thermoforming mold (17) with one of its longitudinal ends, said transfer means (15) being controllably movable along a vertical direction to access said folding compartments (14) and being able to rotate about an axis (44) that lies transversely to said carriage (8) to face the access side of said thermoforming mold (17).

12. Apparatus according to one or more of the preceding claims, characterized in that said thermoforming mold (17) is mounted on a support (45) that can rotate about an axis (46) that lies transversely to the axis (9) of said carriage (8) in order to move the access side of the compartments (16) of the thermoforming mold (17) from a label receiving position, in which said compartments (16) of the thermoforming mold (17) face the end of said carriage (8), to a molding position, in which the open side of said compartments (16) of the thermoforming mold (17) faces upward.

13. Apparatus according to one or more of the preceding claims, characterized in that said compartments (16) of the thermoforming mold (17) are provided, on their walls meant to make contact with the labels (11), with suction means (50) that can be controllably connected to a vacuum source.
